# EUROPEAN PATENT SPECIFICATION

(11) **EP 4 394 051 B1**
(45) Date of publication and mention of the grant of the patent: **28.10.2026**
(21) Application number: 22880607.1
(22) Date of filing: 21.07.2022
(51) Int. Cl.: C21C 5/52, F27D 19/00, F27D 21/00, F27B 3/28

(54) **METHOD FOR PREDICTING IMPURITY CONCENTRATION OF MOLTEN IRON, METHOD FOR MANUFACTURING MOLTEN IRON, AND APPARATUS FOR PREDICTING IMPURITY CONCENTRATION OF MOLTEN IRON**
VERFAHREN ZUR VORHERSAGE DER UNREINHEITSKONZENTRATION VON GESCHMOLZENEM EISEN, VERFAHREN ZUR HERSTELLUNG VON GESCHMOLZENEM EISEN
PROCÉDÉ DE PRÉDICTION DE CONCENTRATION D'IMPURETÉS DE FER FONDU, PROCÉDÉ DE FABRICATION DE FER FONDU, ET APPAREIL DE PRÉDICTION DE CONCENTRATION D'IMPURETÉS DE FER FONDU

(30) Priority: 12.10.2021 JP 2021167375
(43) Date of publication of application: 03.07.2024
(73) Proprietor: JFE Steel Corporation, Tokyo 100-0011 (JP)
(72) Inventor: MIWA, Yoshihiro, Tokyo 100-0011 (JP); TODO, Wataru, Tokyo 100-0011 (JP); ODA, Nobuhiko, Tokyo 100-0011 (JP)
(74) Representative: Hoffmann Eitle
(86) International application number: PCT/JP2022/028300
(87) International publication number: WO 2023/062905

(56) References cited:
- JP-A- 2005 272 859
- JP-A- 2012 092 435
- JP-B2- 5 909 957
- SANDBERG ET AL: "Scrap management by statistical evaluation of EAF process data", CONTROL ENGINEERING PRACTICE, PERGAMON PRESS, OXFORD, GB, vol. 15, no. 9, 11 May 2007 (2007-05-11), pages 1063 - 1075, XP022070824, ISSN: 0967-0661, DOI: 10.1016/J.CONENGPRAC.2007.01.001
- GAJIC DRAGOLJUB ET AL: "Modelling of electrical energy consumption in an electric arc furnace using artificial neural networks", ENERGY, ELSEVIER, AMSTERDAM, NL, vol. 108, 5 August 2015 (2015-08-05), pages 132 - 139, XP029687659, ISSN: 0360-5442, DOI: 10.1016/J.ENERGY.2015.07.068
- ARZPEYMA NILOOFAR ET AL: "Development of a Mass and Energy Balance Model and Its Application for HBI Charged EAFs", METALS, vol. 10, no. 3, 1 March 2020 (2020-03-01), CH, pages 311, XP093207609, ISSN: 2075-4701, DOI: 10.3390/met10030311

## Description

### Technical Field

The present invention relates to a method for predicting an impurity concentration of molten iron after refining of molten iron to be refined in an electric arc furnace facility, a method for producing molten iron using the method for predicting the impurity concentration, a method for creating a trained machine learning model used for predicting the impurity concentration of refined molten iron, and a device for predicting the impurity concentration of molten iron.

### Background Art

In an electric arc furnace facility, molten iron is produced by melting a main raw material composed of, for example, ferrous scrap materials (cold iron sources) using arc heat. The types of ferrous scrap materials are specified in the Uniform Standards of Ferrous Scraps. There are a wide variety of types, such as heavy scrap, new scrap, and shredded, and the price is determined by the quality of scrap. Heavy scrap (H1 to H4) is the most commonly distributed scrap in the market. Heavy scrap, which is mixed with iron sources dismantled on the market, has a risk of contamination with impurities, such as copper (Cu) and tin (Sn), which are difficult to remove by smelting and refining, what are called tramp elements.

The prices of ferrous scrap materials are determined by taking these scrap qualities into account. For example, what is called new scrap, which is generated when a steel sheet is blanked, is traded at a high price because the risk of mixing tramp elements is low and the amount of distribution is limited as compared with heavy scrap. Thus, when a large amount of new scrap is used in order to reduce the risk of mixing of tramp elements, the production cost increases. With regard to the blending ratio of ferrous scrap materials, the blending ratio of heavy scrap and new scrap has conventionally been determined based on the past knowledge and situation judgment of a person within a range in which an actual operation can be performed, in such a manner that molten iron to be produced satisfies the chemical composition standard.

From such a background, Patent Literature 1 discloses a system in which the blending ratio of each scrap material is set as a variable, the purchase price and the use value of each scrap material are set as constants, and calculation is performed many times while sequentially changing the variable to determine the variable that minimizes the steelmaking operation cost. Patent Literature 1 states that calculating the scrap blending ratio so as to satisfy the required copper specification should reduce production costs while effectively utilizing low-grade scrap. Nonpatent litterature "Scrap management by statistical evaluation of EAF process data" from SANDBERG ET AL (DOI: 10.1016/ J.CONENGPRAC.2007.01.001) and "Modelling of electrical energy consumption in an electric arc furnace using artificial neural networks" from GAJIC DRAGOLJUB ET AL (DOI: 10.1016/ J.ENERGY.2015.07.068) disclose alternative methods of predicting impurity concentration of molten iron.

### Citation List

### Patent Literature

PTL 1: Japanese Unexamined Patent Application Publication No. 10-168510

### Summary of Invention

### Technical Problem

In Japan, where high-grade steels are produced with strict control of tramp elements (particularly copper specification) are produced, it is not possible to recycle 100% of low-grade scrap with high risk of tramp elements, such as heavy scrap generated in Japan. Thus, 8 million to 9 million tons of ferrous scrap materials are exported abroad per year. In comparison with the molten iron produced by a blast furnace-converter method, molten iron produced by an electric arc furnace method consumes less energy and emits less CO₂. For this reason, also from the viewpoint of environmental impact, it is hoped that promotion will be made to achieve 100% domestic recycling of ferrous scrap materials produced in Japan.

In response to such a demand, in the method of Patent Literature 1, it is possible to produce molten iron that satisfies chemical composition specifications to some extent while reducing the production cost. Thus the method is used for blending a variety of ferrous scrap materials, and further can contribute to effective utilization of low-grade scrap in Japan.

However, as in Patent Literature 1, the concentration prediction of the tramp elements using only the blending ratio of each scrap material as a variable is low in accuracy. It cannot be said that the calculation of the blending of the ferrous scrap materials performed based on the concentration with such low prediction accuracy is optimized, and in the actually produced molten iron, the upper limit of specification of the copper component as a tramp element is frequently exceeded. For this reason, there has been a problem that the amount of heavy scrap used is reduced and the amount of high-grade scrap, such as new scrap, used is inevitably increased, resulting in an increase in the production cost of molten iron.

The present invention has been accomplished in view of such problems of the prior art, and aims to provide a method and an apparatus for predicting the impurity concentration of molten iron, which can result in improved prediction accuracy of the concentration of an impurity, as a tramp element, in molten iron in refining the molten iron using an electric arc furnace, a method for producing molten iron that satisfies required chemical composition specifications and can reduce the production cost by increasing the amount of low-grade scrap blended, and a method for creating a trained machine learning model used for predicting the impurity concentration of molten iron after refining. Solution to Problem

The inventors have conducted intensive studies to solve the above-mentioned problems, and have found that the prediction accuracy of the impurity concentration of molten iron to be produced can be improved by using, as input data, at least one of the impurity concentration of molten iron in the preceding charge, the amount of residual molten iron of the preceding charge (the amount of residual molten iron in the preceding charge), and the market transaction price information of an impurity, in addition to the amounts of individual ferrous scrap materials charged. The inventors have found that optimization of the blending of the ferrous scrap materials based on the impurity concentration of molten iron in the subsequent charge predicted in this way can satisfy the required chemical composition specifications and can increase the amount of low-grade scrap blended to reduce the production cost.

The present invention has been made on the basis of these findings, and is described in appended claims 1-3.

### Advantageous Effects of Invention

The implementation of the method for predicting the impurity concentration of molten iron according to the present invention makes it possible to predict, with high accuracy, the impurity concentration of the molten iron refined in an electric arc furnace facility. The optimization of the blending of the ferrous scrap materials based on the impurity concentration of the molten iron predicted by the method can increase the amount of low-grade scrap blended while satisfying the required chemical composition specifications, thereby reducing the production cost of the molten iron.

### Brief Description of Drawings

[Fig. 1] Fig. 1 is a view illustrating the outline of a direct-current (DC) electric arc furnace facility.
[Fig. 2] Fig. 2 is a graph illustrating changes in the estimated copper concentration of heavy scrap and percentage change in copper price.
[Fig. 3] Fig. 3 is a schematic view illustrating an example of the configuration of an electric-arc-furnace control apparatus, in which a method for predicting the concentration of an impurity in molten iron according to the present embodiment can be implemented.
[Fig. 4] Fig. 4 is a view illustrating a time-series operation progress when there is a downtime between charges.
[Fig. 5] Fig. 5 is a view illustrating a time-series operation progress when there is no downtime between charges.

### Description of Embodiments

Embodiments of the present invention will be described below. The following embodiments merely represent preferred examples of the present invention, and the present invention is not limited to these examples.

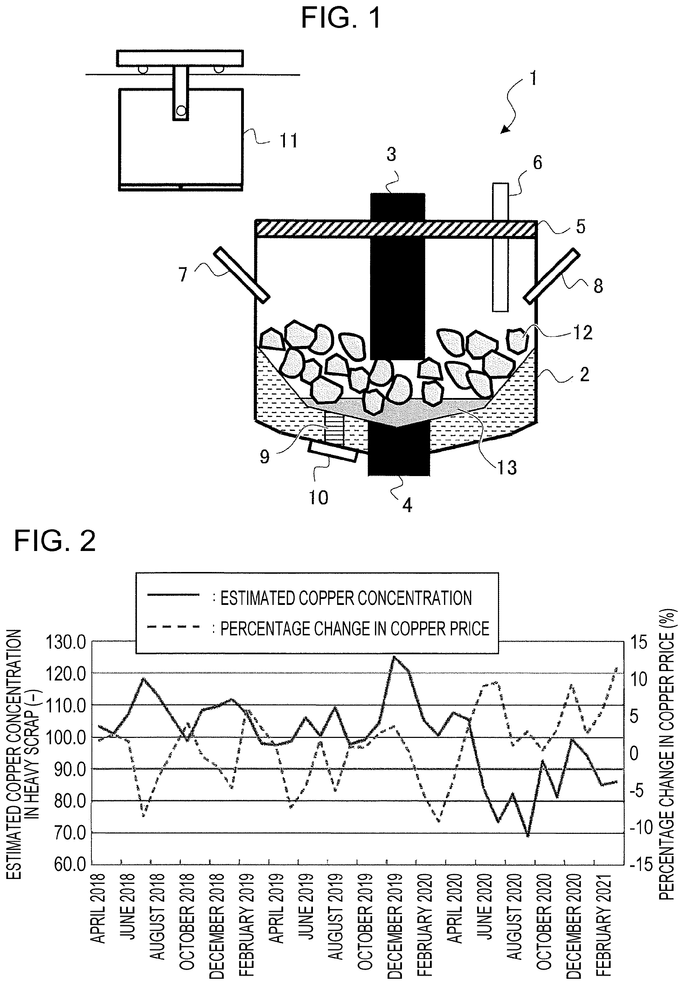

Fig. 1 is a view illustrating an outline of a direct-current electric arc furnace facility 1 used as an electric arc furnace facility in the present embodiment, the facility including one upper electrode 3 and a bottom electrode 4 disposed on the bottom of the furnace. In the method for producing molten iron according to the present embodiment, ferrous scrap materials 12 charged into a vessel 2 are melted by the following procedure to produce molten iron 13.
(1) The ferrous scrap materials 12 are charged into the vessel 2 of the direct-current electric arc furnace facility 1.
(2) A direct current is passed between the upper electrode 3 and the bottom electrode 4. The ferrous scrap materials 12 are melted by heating (arc heating) due to an arc generated between the upper electrode 3 and the bottom electrode 4 or between the upper electrode 3 and the ferrous scrap materials 12 in the vessel to produce the molten iron 13.
(3) Instead of (2) described above, the ferrous scrap materials 12 charged into the vessel 2 are melted to produce the molten iron 13 by heating due to the oxidation reaction of oxygen gas from an oxygen-blowing lance 6 and a carbonaceous material from a carbonaceous material injection lance 7 and/or heating with a burner 8 in combination.

Although Fig. 1 illustrates the direct-current electric arc furnace facility 1 as the electric arc furnace facility, a three-phase alternating-current electric arc furnace facility may be used as the electric arc furnace facility. In the three-phase alternating-current electric arc furnace facility, three electrodes penetrating through a roof are installed, an alternating current is applied between these electrodes, and ferrous scrap materials charged into a vessel is melted by an arc generated between these electrodes. Other structures of the three-phase alternating-current electric arc furnace facility are the same as those of the direct-current electric arc furnace facility 1.

In a method for charging the ferrous scrap materials 12 into the vessel 2, the ferrous scrap materials 12 filled in a drop-bottom bucket 11 at a predetermined blending ratio are charged into the vessel 2 from the drop-bottom bucket 11 while the upper electrode 3 and the roof 5 are retreated to open the upper portion of the vessel 2. The charging of the ferrous scrap materials 12 with the drop-bottom bucket 11 is performed two or three times per charge. The reason for charging the vessel 2 with the ferrous scrap materials 12 in two to three times per charge is that the bulk densities of the ferrous scrap materials 12 are low and the predetermined target amount of molten iron 13 cannot be obtained in a single charge.

The ferrous scrap materials 12 of the first bucket are charged into the vessel 2, the charged ferrous scrap materials 12 of one bucket are melted by arc heating, and thereafter, the ferrous scrap materials 12 are additionally charged into the vessel 2 again. This operation is repeated. When a required amount of molten iron is reached, a tapping door 10 closing a tap hole 9 is opened to tap the molten iron 13 into a ladle (not illustrated) or the like through the tap hole 9. At this time, the tapped molten iron 13 is sampled, and the components of the molten iron 13 are analyzed.

In the method for producing molten iron according to the present embodiment, the amount of molten iron 13 in the vessel 2 is not entirely tapped, and part of the molten iron 13 remains in the vessel 2 and is carried over to the subsequent charge. This is called a hot heel operation. In the hot heel operation, when the sum of the amount of molten iron tapped and the amount of residual molten iron is defined as a furnace volume, the ratio of the amount of residual molten iron to the furnace volume is often about 50% or less by mass. In this way, when about 50 % or less by mass of the molten iron 13 remains in the vessel, it is possible to increase the melting efficiency of the ferrous scrap materials 12 to be charged in the subsequent charge.

However, as the amount of residual molten iron increases, the components of the molten iron in the preceding charge more affects the components in the molten iron in the subsequent charge. In particular, impurities contained in the residual molten iron are carried over to the subsequent charge as they are. For this reason, it is necessary to optimize the blending of the ferrous scrap materials 12 in consideration of the amount of residual molten iron and the impurity concentration of the residual molten iron.

In the method for producing molten iron according to the present embodiment, first, the concentration of an impurity, as a tramp element, in the molten iron 13 in the subsequent charge after refining is predicted in consideration of the amounts of ferrous scrap materials 12 charged, the amount of residual molten iron in the preceding charge, the impurity concentration of the residual molten iron, and the market transaction price information of the impurity. Then the amounts of ferrous scrap materials 12 blended are adjusted in such a manner that the predicted value is a target value of the impurity concentration of the molten iron 13.

The ferrous scrap materials 12 are classified and managed for each type. In the operation of the electric arc furnace facility, a plurality of types of ferrous scrap materials 12 are blended and used. The ferrous scrap materials 12 contain a tramp element, such as copper (Cu), which is not easily removed by the electric arc furnace facility. In the ferrous scrap materials 12, a ferrous scrap material having an impurity concentration higher than the average value of the impurity concentrations of all the ferrous scrap materials is inexpensive low-grade scrap, and a ferrous scrap material having an impurity concentration lower than the average value of the impurity concentrations of all the ferrous scrap materials is expensive high-grade scrap. As impurity elements regarded as tramp elements, copper and tin (Sn) are representative. For example, nickel (Ni) and molybdenum (Mo), which are difficult to remove in electric arc furnace facility, are also elements that deteriorate the steel quality, depending on the type of steel. Thus, nickel (Ni), molybdenum (Mo), and so forth can be tramp elements, depending on the type of steel.

The adjustment of the amount of ferrous scrap materials 12 charged is performed by increasing the amount of low-grade scrap blended until the predicted impurity concentration of the molten iron 13 in the subsequent charge reaches the target value. This enables the amount of low-grade scrap blended to increase while the required chemical composition specifications are satisfied, thereby reducing the production cost of the molten iron 13.

Fig. 2 is a graph illustrating changes in the estimated copper concentration of heavy scrap and the percentage change in copper price. In Fig. 2, the horizontal axis represents the year and month, the left vertical axis represents the estimated copper concentration (-) of heavy scrap, and the right vertical axis represents the percentage change in copper price (%). The estimated copper concentration of the heavy scrap is obtained by calculating back the copper concentration of the heavy scrap from the actual value of the copper concentration of the molten iron, the amount of ferrous scrap materials used other than the heavy scrap, and its estimated copper concentration, calculating the monthly average thereof, and normalizing the monthly average to the average value for 36 months. This indicates that an estimated copper concentration of 100.0 on the vertical axis is an average value for 36 months. In addition, (-) means non-dimensional. The percentage change in copper price was obtained by calculating the rates of increase and decrease in copper price from the previous month to the current month, and the price of copper was obtained by referring to the copper price on the website of JX metals corporation.

As illustrated in Fig. 2, with regard to copper, which is a representative of tramp elements, it has been found that there is a tendency that the estimated copper concentration of heavy scrap is increased in a month in which the copper price is lower than that in the previous month, and in contrast, the estimated copper concentration of the heavy scrap is decreased in a month in which the copper price is higher than that in the previous month. That is, it can be seen that there is a negative correlation between the estimated copper concentration of heavy scrap and the copper price in a scrap market.

Thus, there is a correlation between the estimated copper concentration of the heavy scrap and the copper price in the scrap market. It is thus understood that the prediction accuracy of the copper concentration can be improved by predicting the copper concentration in consideration of the market transaction price information in the scrap market. In Fig. 2, copper was explained as an example. However, when the price of another tramp element increases, attempts are made to recover the tramp element, so it is thought that there is a similar tendency. From these findings, it is understood that the prediction accuracy of the concentration of an impurity component can be improved by considering the transaction price information of the target impurity (tramp element). In the present embodiment, the description has been given using the percentage change in price as the market transaction price information. The present invention, however, is not limited thereto. Any index may be used as long as the index indicates a change in price in the market, and the transaction price may be used.

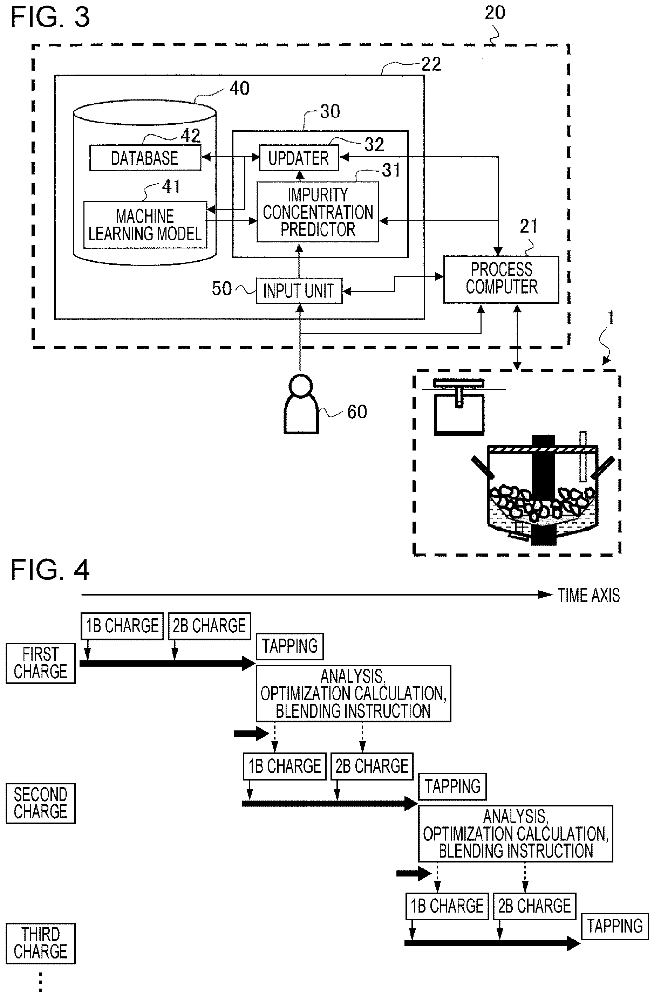

Fig. 3 is a schematic view illustrating an example of the configuration of an electric-arc-furnace control apparatus 20, in which a method for predicting the impurity concentration of molten iron according to the present embodiment can be implemented. The electric-arc-furnace control apparatus 20 includes a process computer 21 and an impurity-concentration prediction device 22.

The process computer 21 is a device for performing the control, data processing, and data storage in the operation of the direct-current electric arc furnace facility 1. The impurity-concentration prediction device 22 outputs the predicted value of the impurity concentration of refined molten iron in the subsequent charge from the operating conditions (amounts of individual ferrous scrap materials, the impurity concentration of molten iron in the preceding charge, the amount of molten iron carried over from the preceding charge (the amount of residual molten iron)) and the market transaction price information of the impurity. The impurity-concentration prediction device 22 determines the amounts of individual ferrous scrap materials blended in the subsequent charge.

The impurity-concentration prediction device 22 includes a controller 30, a storage unit 40, and an input unit 50. The controller 30 includes an impurity concentration predictor 31 and an updater 32. The controller 30 is, for example, a CPU, and executes predetermined processing in the impurity concentration predictor 31 and the updater 32 by using a program or data stored in the storage unit 40.

The storage unit 40 includes, for example, an information recording medium, such as an update-recordable flash memory, a built-in or data transmission terminalconnected hard disk, or a memory card, and a read/write device therefor. In the storage unit 40, a program for implementing predetermined processing in the impurity concentration predictor 31 and the updater 32, data used during execution of the program, and so forth are stored in advance. The market transaction price information of the impurity is also stored in the storage unit 40 in advance. The storage unit 40 stores a trained machine learning model 41 that outputs the impurity concentration of molten iron in the subsequent charge by inputting the operating conditions, and a database 42.

In the database 42, a predetermined number of data sets including operating conditions of refining performed in the electric arc furnace facility in the past, market transaction price information sets of the impurity, and the actual values of the impurity concentration of molten iron are stored in association with, for example, a serial number assigned to each charge. The refining operating conditions include the amounts of ferrous scrap materials charged, the impurity concentration of the molten iron in the preceding charge, and the amount of residual molten iron in the preceding charge.

The machine learning model 41 is a trained machine learning model by performing machine learning using the data set stored in the database 42 as training data. The machine learning model 41 according to the present embodiment is a machine learning model in which the amounts of individual ferrous scrap materials charged, the impurity concentration of molten iron in the preceding charge, the amount of residual molten iron in the preceding charge, and the market transaction price information of the impurity are used as input data, and the impurity concentration of the molten iron in the subsequent charge is used as output data.

As the machine learning model 41, a known machine learning model, such as a neural network or a deep learning, may be used. The machine learning model 41 is subjected to machine learning by using, as a training data, a data set including a set of the operating conditions (the amounts of individual ferrous scrap materials charged, the impurity concentration of molten iron in the preceding charge, and the amount of residual molten iron in the preceding charge), the market transaction price information of the impurity, and the actual value of the impurity concentration of molten iron stored in the database 42, thereby creating the trained machine learning model 41. The trained machine learning model 41 is stored in the storage unit 40. The trained machine learning model 41 is an example of an impurity concentration prediction model for predicting an impurity concentration.

The input unit 50 receives an input from an operator 60. Upon receiving the input from the operator 60, the input unit 50 outputs the input value to the impurity concentration predictor 31. The input from the operator 60 is also sent to the process computer 21. The input unit 50 is, for example, an input device such as a keyboard or a mouse.

A process of calculating the predicted value of the impurity concentration of molten iron in the subsequent charge will be described below. The process of calculating the predicted value of the impurity concentration of molten iron in the subsequent charge is performed by the impurity concentration predictor 31 at the stage where the impurity concentration of molten iron in the preceding charge and the amount of residual molten iron in the preceding charge are determined. For example, the operator 60 inputs the impurity concentration of molten iron in the preceding charge and the amount of residual molten iron in the preceding charge to the impurity concentration predictor 31 with the input unit 50. The amounts of individual ferrous scrap materials charged are input from the process computer 21 to the impurity concentration predictor 31. The market transaction price information of the impurity is read from the storage unit 40 by the impurity concentration predictor 31.

When the impurity concentration predictor 31 acquires the amounts of individual ferrous scrap materials charged, the impurity concentration of the molten iron in the preceding charge, the amount of residual molten iron in the preceding charge, and the market transaction price information of the impurity, the impurity concentration predictor 31 reads the trained machine learning model 41 stored in the storage unit 40. The impurity concentration predictor 31 inputs the amounts of individual ferrous scrap materials charged, the impurity concentration of molten iron in the preceding charge, the amount of residual molten iron in the preceding charge, and the market transaction price information of the impurity to the trained machine learning model 41, and outputs the impurity concentration of molten iron in the subsequent charge. In this way, the impurity concentration predictor 31 calculates the predicted value of the impurity concentration of refined molten iron in the subsequent charge.

Next, the optimization processing of the ferrous scrap material blend will be described. The impurity concentration predictor 31 compares the predicted value of the impurity concentration of molten iron in the subsequent charge with a predetermined target impurity concentration. The target impurity concentration is input from the process computer 21 to the impurity concentration predictor 31.

When the predicted value of the impurity concentration of molten iron in the subsequent charge is lower than the target impurity concentration, the impurity concentration predictor 31 increases the proportion of low-grade scrap blended and decreases the proportion of high-grade scrap blended in the ferrous scrap materials. The impurity concentration predictor 31 determines the predicted value of the impurity concentration of molten iron in the subsequent charge again at the blending ratio of the ferrous scrap materials. This operation is repeatedly performed until the predicted value of the impurity concentration of molten iron in the subsequent charge exceeds the target impurity concentration. When the predicted value of the impurity concentration of molten iron in the subsequent charge exceeds the target impurity concentration, the impurity concentration predictor 31 determines the blending ratio of the ferrous scrap materials used in the previous prediction as the blending ratio of the ferrous scrap materials used in the operation in the subsequent charge. The impurity concentration predictor 31 executes the optimization processing of the blending of the ferrous scrap materials as described above, determines the blending ratio of the ferrous scrap materials used for the operation in the subsequent charge in such a manner that the predicted value of the impurity concentration of molten iron in the subsequent charge is the predetermined target impurity concentration, and determines the amount of low-grade scrap charged.

The impurity concentration predictor 31 outputs the blending ratio of the ferrous scrap materials to the process computer 21. When the process computer 21 acquires the blending ratio of the ferrous scrap materials, the process computer 21 controls the amounts of individual ferrous scrap materials conveyed to the drop-bottom bucket 11 in such a manner that the ferrous scrap materials having the blending ratio are filled in the drop-bottom bucket 11.

For example, when the ferrous scrap materials are charged into the vessel 2 twice with the drop-bottom bucket 11 (hereinafter, referred to as "two buckets"), the ferrous scrap materials of the first bucket are charged into the vessel 2, the ferrous scrap materials of the first bucket are melted by arc heating, and then the ferrous scrap materials of the second bucket is charged into the vessel 2.

First, a time-series operation progress will be described with reference to Fig. 4 when there is a downtime (idle time) between charges. First, for the first charge (initial charge), two buckets (in Fig. 4, the bucket is denoted as "B") of ferrous scrap materials are charged, melted, and refined, as usual. After melting, part of the molten iron is tapped, the tapped molten iron is sampled, and the actual value of the impurity concentration of the molten iron in the first charge is determined.

Thereafter, during the downtime, the process of calculating the predicted value of the impurity concentration of molten iron in the subsequent charge and the process of optimizing the blending of the ferrous scrap materials are performed using the amounts of individual ferrous scrap materials charged, the impurity concentration of the molten iron in the preceding charge, the amount of residual molten iron in the preceding charge, and the market transaction price information of the impurity, and the blend of the ferrous scrap materials in the subsequent charge is determined. The process computer 21 controls the conveyance of the ferrous scrap materials to the first bucket and the second bucket so as to achieve the determined blending ratio. In this way, the ferrous scrap materials with optimized blending amounts are charged into the vessel 2 as the first and second buckets, and then refining is performed.

The actual value of the amount of residual molten iron in the preceding charge is determined by calculation as follows.

The amount of residual molten iron in the first charge is calculated by "amount of residual molten iron = amount of ferrous scrap materials charged (measured at the time of charging) × yield (0.925) - amount of molten metal tapped (measured at the time of tapping)".

The amount of residual molten iron in the second and subsequent charges is calculated by "amount of residual molten iron = amount of residual molten iron in preceding charge + amount of ferrous scrap materials charged (measured at the time of charging) × yield (0.925) - amount of molten metal tapped (measured at the time of tapping)".

The amount of residual molten iron in the final charge is calculated by "amount of residual molten iron = amount of residual molten iron in preceding charge + amount of ferrous scrap materials charged (measured at the time of charging) × yield (0.925) - amount of molten metal tapped (measured at the time of tapping)".

In the final charge, usually, the molten iron 2 is not left in the vessel, that is, the amount of residual molten iron is substantially zero (0). To make the amount of residual molten iron substantially zero, the vessel 2 is tilted by a tilting device (not illustrated), and the entire amount of molten iron 13 in the vessel is discharged from the tap hole 9. The amount of slag in the vessel is about 10 tons, including the amount carried over from the preceding charge, the amount generated in the current charge, and the amount of slag discharged during operation, in order to increase the thermal efficiency by foaming the slag in the vessel. The slag in the vessel is formed by CaO-based flux (mainly quicklime) charged into the vessel 2.

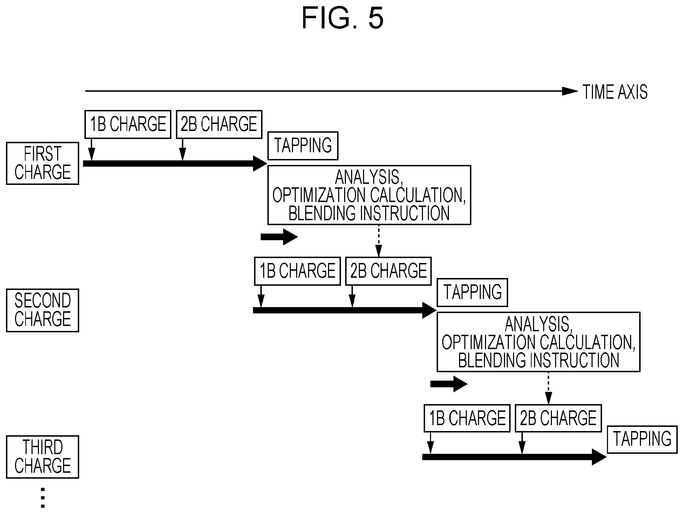

In contrast, a time-series operation progress when there is no downtime between charges as the productivity priority will be described with reference to Fig. 5. In the first charge (initial charge), two buckets (in Fig. 5, the bucket is denoted by "B") of the ferrous scrap materials are charged, melted, and refined, as usual. When the molten iron of the first charge is tapped, the ferrous scrap materials of the second charge are immediately charged into the vessel 2. It takes time to analyze the impurity concentration of the molten iron of the first charge (preceding charge); hence, the prediction of the impurity concentration of the molten iron of the second charge (subsequent charge) and the optimization calculation of the ferrous scrap materials are not in time for the charging of the ferrous scrap materials of the first bucket of the second charge (subsequent charge). Accordingly, in the first bucket in the subsequent charge when there is no downtime between charges, the ferrous scrap materials having a predetermined blend is filled in the drop-bottom bucket 11. In the second bucket, the amounts of individual ferrous scrap materials are controlled in such a manner that the total of the ferrous scrap materials in the first bucket and the second bucket is the blend determined by the optimization calculation of the ferrous scrap materials.

In this way, even when there is no downtime between charges, the ferrous scrap materials whose composition is determined by the calculation processing for optimization of the ferrous scrap materials can be charged. When the ferrous scrap materials are charged into the bucket multiple times, the combination of the blends of the scrap materials, the amount charged, and so forth may be freely adjusted under the constraint conditions (such as the loading weight limit of the drop-bottom bucket, the bulk of the ferrous scrap materials, and the storage place).

As described above, in the calculation for optimizing the blending of the ferrous scrap materials, the blending of the ferrous scrap materials is calculated in such a manner that the blending cost of the ferrous scrap materials is minimized and the impurity concentration is within the required specification range.

The prediction processing of the impurity concentration of the molten iron in the subsequent charge and the optimization calculation of the blending of the ferrous scrap materials are not necessarily performed by using the actual value of the impurity concentration of the molten iron in the preceding charge and the actual value of the amount of residual molten iron of the molten iron in the preceding charge. For example, the impurity concentration in the subsequent charge may be predicted in advance in the refining order of each charge planned in one day, and the optimization calculation of the blending of the ferrous scrap materials may be performed using the amounts of individual ferrous scrap materials charged, the predicted impurity concentration, and the amount of residual molten iron scheduled. However, after each charge, the prediction of the impurity concentration of the molten iron in the subsequent charge and the optimization calculation of the blending of the scrap materials can be performed using the actual value of the impurity concentration of the molten iron in the preceding charge and the actual value of the amount of residual molten iron. As a result, the impurity concentration of the molten iron in the subsequent charge can be predicted with higher accuracy, and the accuracy of the optimization calculation of the blending of the ferrous scrap materials is also increased. Therefore, it is preferable to perform the prediction processing of the impurity concentration of the molten iron and the optimization calculation of the blending of the ferrous scrap materials after each charge.

The blend of the ferrous scrap materials may be determined according to an error range of prediction accuracy. For example, in the case of considering the standard deviation, if the component specifications are regarded as important, the scrap materials may be blended in such a manner that the predicted value + 2σ falls within the target impurity concentration, and if the cost is regarded as important, the blending proportion of the ferrous scrap material that is inexpensive and that has a high impurity risk may be increased. That is, this is a trade-off between the risk of deviation from the specification of the impurity concentration and the cost advantage, and may be determined based on the operation concept.

There are ferrous scrap materials having various components, shapes, and sizes (for example, those specified in "Uniform Standards of Ferrous Scraps" of the Japan Ferrous Raw Materials Association), and the price of ferrous scrap materials varies depending on their quality and market conditions. These ferrous scrap materials are appropriately combined and blended, and melted by arc heating in the vessel to produce molten iron. Of course, the production cost can be minimized by maximizing the blending ratio of the inexpensive ferrous scrap material within various constraints.

The ferrous scrap materials to be melted in the present embodiment may include, for example, direct reduced iron or cold iron, which contains iron as a main component, in addition to the ferrous scrap materials specified in the "Uniform Standards of Ferrous Scraps" of the Japan Ferrous Raw Materials Association. Similarly, the ferrous scrap materials may include home scrap generated from an iron mill, such as unsteady portions of cast pieces cast by a continuous casting method or ingot casting, crops of steel strips generated by rolling of steel materials, and pig iron obtained by solidifying molten iron. These ferrous scrap materials other than those specified in "Uniform Standards of Ferrous Scraps" are classified as different ferrous scrap material types as necessary, and the bulk densities thereof are determined. A ferrous scrap material containing a large amount of iron oxide requires extra energy for reducing the iron oxide, but may be appropriately used in consideration of the operation cost and the like.

The classification of the ferrous scrap materials is not necessarily based on the "Uniform Standards of Ferrous Scraps", and the ferrous scrap materials may be classified by any criteria. In short, it is only necessary to create a model trained from operation records.

There is an electric arc furnace facility provided with a shaft-type preheating chamber connected to an upper portion or a horizontal portion of the vessel 2. In such a facility, the ferrous scrap materials are sequentially charged into the preheating chamber, and the charged ferrous scrap materials are melted while being preheated by the exhaust gas generated in the vessel 2, thereby producing molten iron. Even in such a facility, the method for producing molten iron according to the present embodiment can be performed in the same manner as in a normal electric arc furnace facility, and as soon as the impurity concentration of the molten iron to be tapped is known, the blending ratio of the ferrous scrap materials to be sequentially charged may be optimized, and the amount of low-grade scrap charged may be determined.

The update of the machine learning model 41 will be described below. In the method for predicting the impurity concentration of molten iron according to the present embodiment, the trained machine learning model 41 may be updated after the end of operation. The trained machine learning model 41 is updated after the end of the operation by the amount of individual ferrous scrap materials charged, the ferrous scrap materials being classified by type or grade, the impurity concentration of the molten iron in the preceding charge, the amount of molten iron carried over from the preceding charge (the amount of residual molten iron in the preceding charge), the market transaction price information of the impurity, and the actual value of the impurity concentration of molten iron in the subsequent charge.

After the completion of the operation, the process computer 21 outputs the amounts of individual ferrous scrap materials charged, the impurity concentration of the molten iron in the preceding charge, the amount of residual molten iron in the preceding charge, the market transaction price information of the impurities, and the actual value of the impurity concentration of the molten iron in the subsequent charge to the updater 32. When the updater 32 acquires these pieces of data, the updater 32 records these pieces of data in the database 42 in association with the serial number assigned to each charge.

The updater 32 records the information in the database 42, and then inputs the information stored in the database 42 as training data to the machine learning model 41 for machine learning. In this way, the trained machine learning model 41 may be updated by the updater 32 after the end of operation.

In the above description, an example has been described in which the impurity concentration predictor 31 predicts the impurity concentration of the molten iron in the subsequent charge by using four types of input data of the amounts of individual ferrous scrap materials, the impurity concentration of the molten iron in the preceding charge, the amount of residual molten iron in the preceding charge, and the market transaction price information of the impurity. However, the invention is not limited thereto. The impurity concentration predictor 31 may predict the impurity concentration of the molten iron in the subsequent charge by using at least one input data of the amounts of individual ferrous scrap materials, the impurity concentration of the molten iron in the preceding charge, the amount of residual molten iron in the preceding charge, and the market transaction price information of the impurity. Thus, the impurity concentration can be predicted with higher accuracy than that in a method for predicting the impurity concentration only from the amounts of individual ferrous scrap materials.

The impurity concentration of the molten iron in the subsequent charge may be predicted from the amounts of individual ferrous scrap materials charged and the impurity concentration of the molten iron in the preceding charge by using the amount of residual molten iron scheduled in the preceding charge without using the actual measured value of the amount of residual molten iron. That is, the impurity concentration of the molten iron in the subsequent charge may be predicted from the amounts of individual ferrous scrap materials charged and the amount of residual molten iron in the preceding charge by using the copper concentration obtained by calculation without using the actual measured value of the copper concentration of the molten iron in the preceding charge. The impurity concentration of the molten iron in the subsequent charge may be predicted by using data other than these in combination.

The trained machine learning model 41 need not be stored in the storage unit 40 in advance. For example, the machine learning model may be stored in the storage unit 40 in advance, and each time the impurity concentration predictor 31 outputs the predicted value of the impurity concentration, the machine learning may be performed using the dataset stored in the database 42 as the training data to create the trained machine learning model.

In the present embodiment, while an example in which the trained machine learning model 41 is used as the impurity concentration prediction model is described, the present invention is not limited thereto. As the impurity concentration prediction model, a multiple regression model (explanatory variables: the amounts of individual ferrous scrap materials charged, the impurity concentration of the molten iron in the preceding charge, the amount of residual molten iron in the preceding charge, and the market transaction price information of the impurity, objective variable: the impurity concentration of the molten iron in the subsequent charge) may be used. When the multiple regression model is used as the impurity concentration prediction model, the updater 32 updates each parameter of the multiple regression model.

### EXAMPLES

A test in which ferrous scrap materials were melted to produce molten iron by applying the present invention (inventive examples) and a test in which ferrous scrap materials were melted to produce molten iron without applying the present invention (comparative examples) were conducted with the direct-current electric arc furnace facility illustrated in Fig. 1, This direct-current electric arc furnace facility had a vessel with a diameter of about 6.3 m and a height of about 4.1 m, and was of a direct-current type in which a carbonaceous material injection lance, a burner, and a water-cooling-type oxygen-blowing lance were installed and one upper electrode was disposed at the center.

Table 1 presents the operating conditions of the direct-current electric arc furnace facility in inventive examples and comparative examples, and Table 2 presents the concept of the material balance of the iron source in the vessel for each charge. The operating conditions presented in Table 1 and the material balance concept presented in Table 2 are the same for both the inventive examples and the comparative examples.

**[Table 1]**

| | |
|---|---|
| Types of ferrous scrap materials | heavy H2, new scrap |
| Oxygen-blowing lance, flow rate | about 3,000 Nm³/h |
| Amount of coke lump charged | about 1,000 kg |
| Amount of coke breeze used | about 500 kg |
| Amount of quicklime charged | 500 kg |

**[Table 2]**

| | Input | | Output | |
|---|---|---|---|---|
| Initial charge | Ferrous scrap materials | about 205 tons | Molten iron | about 120 tons |
| | | | Residual molten iron | about 70 tons |
| | | | Slag | about 10 tons |
| Second and subsequent charge | Ferrous scrap materials | about 130 tons | Molten iron | about 120 tons |
| | Residual molten iron in preceding charge | about 70 tons | Residual molten iron | about 70 tons |
| | | | Slag | about 10 tons |
| Final charge | Ferrous scrap materials | about 55 tons | Molten iron | about 120 tons |
| | Residual molten iron in preceding charge | about 70 tons | Residual molten iron | no |
| | | | Slag | about 10 tons |

In the inventive examples and the comparative examples, as auxiliary materials, coke lumps serving as an auxiliary fuel and quicklime serving as a slag-forming agent were charged into the vessel from an auxiliary material charging chute (not illustrated) before the start of the operation of each charge. The injection of the coke breeze from the carbonaceous material injection lance and the injection of oxygen gas from the oxygen-blowing lance were performed from the middle to late operation stage in which molten iron and molten slag were generated to some extent in the vessel.

As the ferrous scrap materials, the typical two types of ferrous scrap materials described below were used from the scrap types specified in "Uniform Standards of Ferrous Scraps" of the Japan Ferrous Raw Materials Association.
(i) Heavy scrap: This is sized by guillotine shear, gas cutting, heavy construction machines, or others, and classified into HS and H1 to H4 according to thickness, size, and unit weight. In the present examples, "H2, having a thickness of 3 mm or more and less than 6 mm, a width or height of 500 mm or less × a length of 1,200 mm or less" was used.
(ii) New scrap: This indicates cutting and blanking chips produced during the production of steel-sheet-fabricated products and classified into Press A, Press B, Busheling A, Busheling B, and so forth according to shape and degree of oxidation. In the present examples, a combination of "Press A: a thin steel sheet that has a total of three sides of 1,800 mm or less and a maximum side of 800 mm or less and that is not surface-treated and not oxidized" and "Busheling A: a thin steel sheet that has a width or height of 500 mm or less × a length of 1,200 mm or less and that is not surface-treated and is not oxidized" was used.

Here, heavy scrap has a high risk of being contaminated with tramp elements, which are impurities, and particularly has a risk of being contaminated with copper wire. The copper concentration of molten iron derived from heavy scrap is said to be about 0.2% to 0.4% by mass, and varies widely. Heavy scrap is what is called low-grade scrap.

In contrast, new scrap has good quality and a low risk of copper contamination, and the copper concentration of the molten iron obtained from the new scrap is 0.05% to less than 0.2% by mass. Because the distribution volume of new scrap is limited, it is more expensive than heavy scrap by about 2,000 to 7,000 yen/t-scrap, depending on price fluctuations in the market. New scrap is what is called high-grade scrap.

In the present examples, a test was conducted focusing on the concentration of copper, which is most closely regarded as an impurity component. To create an impurity concentration prediction model, past 3,000 charges were used as training data. In the comparative examples, two explanatory variables, i.e., amounts of "heavy scrap" and "new scrap" charged, were used. In the inventive examples, the number of explanatory variables was set to three to five by adding at least one of "the copper concentration of molten iron in a preceding charge", "the amount of residual molten iron in the preceding charge", and "percentage change in copper price" to the amounts of "heavy scrap" and "new scrap" charged. Here, the "percentage change in copper price" was obtained by calculating the rates of increase and decrease in copper price from the previous month to the current month, and the copper price was obtained by referring to the copper price on the website of JX metals corporation. In the comparative examples, a multiple regression model was used as an impurity concentration prediction model. In the inventive examples, a multiple regression model and a machine learning model were used as the impurity concentration prediction model. A machine learning tool called "dotData" available from NEC Corporation was used as a machine learning model.

In an operation of melting ferrous scrap materials, when a required copper concentration of molten iron deviates from the specification (target value), it is necessary to change the plan to a steel grade conforming to another specification, thereby deteriorating the operation stability. Furthermore, if there is no steel grade that meets the specification, in the worst case, the produced molten iron will be scrapped, resulting in significant loss. That is, a reduction in the rate of deviation from the copper specification leads to the improvement of the operation stability, and the cost reduction advantage can be provided by increasing the proportion of heavy scrap.

In the present examples, the amount of heavy scrap charged, which is low-grade scrap, was determined by using the following two methods as a calculation method for optimizing the blending of ferrous scrap materials in both the inventive examples and the comparative examples.

Calculation method 1: This is a method in which the copper concentration of molten iron in the subsequent charge is sequentially predicted using the impurity concentration prediction model in the planned refining order, and the amount of heavy scrap charged in the subsequent charge is determined based on the predicted value. The amount of residual molten iron in the preceding charge was 70 tons, which was the amount of residual molten iron scheduled.

Calculation method 2: This is a method in which the copper concentration of molten iron in the subsequent charge is predicted using the actual value of the copper concentration of molten iron in the preceding charge and the actual value of the amount of residual molten iron in the preceding charge, and the amount of low-grade scrap (heavy scrap) charged in the subsequent charge is determined based on this predicted value.

That is, the difference between the calculation method 1 and the calculation method 2 is whether the amount of low-grade scrap charged is determined in advance or the amount of low-grade scrap charged is determined for each charge. In the calculation method 1, the copper concentrations of the molten irons of all the charges are predicted in advance, and the actual value of the copper concentration of the molten iron in the preceding charge and the actual value of the amount of residual molten iron in the preceding charge are not used. Thus, the prediction accuracy of the copper concentration is lower than that of the calculation method 2.

The ferrous scrap materials were charged into a drop-bottom bucket and charged into the vessel in two stages, i.e., before the start of operation and during the middle of operation. Here, in Inventive Examples 2 and 4 to 6, in which the calculation method 2 was used, since there was no downtime between charges, the optimization calculation of the blending of the ferrous scrap materials was performed on the second drop-bottom bucket. In the subsequent charge, the blending of the ferrous scrap materials was output in such a manner that the predicted copper concentration of the molten iron does not deviate from the specification and the amount of heavy scrap charged was increased, and the blending of the ferrous scrap materials was optimized for the second drop-bottom bucket. In Comparative Example 2, in which the calculation method 2 was used, since there was no downtime between charges, the optimization calculation of the blending of the ferrous scrap materials was performed on the second drop-bottom bucket.

A standard deviation was used as a criterion for a blend in which the copper concentration of molten iron did not deviate from the specification, and the output predicted value + 2σ was used as a determination criterion. The standard deviation σ is the standard deviation of the predicted value (the number of data sets: 3,000) of the copper concentration calculated by creating an impurity concentration prediction model using the past 3,000 charges and using the impurity concentration prediction model and the input data of the past 3,000 charges. Table 3 below presents the conditions for blending ferrous scrap materials and the operational results for each charge.

**[Table 3]**

| | Explanatory variable | | | | | Model | | | | Calculation method for optimizing blending of ferrous scrap materials | Operation results | | | | |
|---|---|---|---|---|---|---|---|---|---|---|---|---|---|---|---|
| | Heavy scrap | New scrap | Copper concentration in molten iron in preceding charge | Amount of residual molten iron in preceding charge | Percentage change in copper price | Prediction method | R² | +2σ | Charge performed | | Number of times of deviation from copper specification | Rate of occurrence of deviation from copper specification % | Evaluation of copper component | Heavy scrap ratio (average) % by mass | Evaluation of scrap ratio |
| Comparative Example 1 | ○ | ○ | - | - | | Multiple regression | 0.70 | 0.09 | 30 | Calculation method 1 | 3 | 10.0 | - | 52.4 | - |
| Comparative Example 2 | ○ | ○ | - | - | | Multiple regression | 0.70 | 0.09 | 30 | Calculation method 2 | 2 | 6.7 | - | 52.5 | - |
| Inventive Example 1 | ○ | ○ | ○ | ○ | | Multiple regression | 0.83 | 0.08 | 30 | Calculation method 1 | 2 | 6.7 | ○ | 52.6 | ○ |
| Inventive Example 2 | ○ | ○ | ○ | ○ | | Multiple regression | 0.83 | 0.08 | 30 | Calculation method 2 | 1 | 3.3 | ○ | 52.9 | ○ |
| Inventive Example 3 | ○ | ○ | ○ | ○ | | Machine learning | 0.94 | 0.03 | 30 | Calculation method 1 | 1 | 3.3 | ○ | 53.0 | ○ |
| Inventive Example 4 | ○ | ○ | ○ | ○ | | Machine learning | 0.94 | 0.03 | 30 | Calculation method 2 | 0 | 0.0 | ○ | 53.5 | ○ |
| Inventive Example 5 | ○ | ○ | | | ○ | Machine learning | 0.80 | 0.06 | 30 | Calculation method 2 | 1 | 3.3 | ○ | 52.8 | ○ |
| Inventive Example 6 | ○ | ○ | ○ | ○ | ○ | Machine learning | 0.96 | 0.02 | 30 | Calculation method 2 | ○ | 0.0 | ○ | 54.0 | ○ |

In Table 3, with regard to the evaluation of the inventive examples, when the values of the "Rate of occurrence of deviation from copper specification" were equal to or lower than those in the comparative examples, the operation stability was determined to be maintained or improved, and the copper component was evaluated as "o (pass)". When the values of the "Heavy scrap ratio (average)" were higher than those in the comparative examples, the cost advantage was determined to be realized by increasing the amount of low-grade scrap charged, and the evaluation of the scrap ratio was "∘ (pass)".

As presented in Table 3, in all the tests in the inventive examples, the values of the "Rate of occurrence of deviation from copper specification" were equivalent or reduced, and the values of the "heavy scrap ratio (average)" were increased. That is, according to the present invention, the results indicated that the production cost can be reduced by satisfying the predetermined target value of the impurity concentration of the molten iron and increasing the amount of low-grade scrap charged. Increasing the amount of low-grade scrap charged can reduce the amounts of ferrous scrap materials exported abroad, leading to an anticipated improvement in the recycling rate of ferrous scrap materials.

### Reference Signs List

- 1: direct-current electric arc furnace facility
- 2: vessel
- 3: upper electrode
- 4: bottom electrode
- 5: roof
- 6: oxygen-blowing lance
- 7: carbonaceous material injection lance
- 8: burner
- 9: tap hole
- 10: tapping door
- 11: drop-bottom bucket
- 12: ferrous scrap material
- 13: molten iron
- 20: electric-arc-furnace control apparatus
- 21: process computer
- 22: impurity-concentration prediction device
- 30: controller
- 31: impurity concentration predictor
- 32: updater
- 40: storage unit
- 41: machine learning model
- 42: database
- 50: input unit
- 60: operator

## Claims

1. A method for predicting, by a device (22) for predicting an impurity concentration of molten iron, an impurity concentration of molten iron refined in an electric arc furnace facility (1), the method comprising:
inputting amounts of individual ferrous scrap materials (12) charged, the ferrous scrap materials (12) being classified by type, and at least one of an impurity concentration of molten iron in a preceding charge, an amount of residual molten iron in the preceding charge, and market transaction price information of an impurity into an impurity concentration prediction model (41); and outputting an impurity concentration of molten iron in a subsequent charge;
wherein the ferrous scrap materials (12) include low-grade scrap having an impurity concentration higher than an average value of impurity concentrations of all the ferrous scrap materials (12) and high-grade scrap having an impurity concentration lower than the average value, and
an amount of the low-grade scrap charged is determined in such a manner that the impurity concentration of the molten iron in the subsequent charge predicted by the method for predicting an impurity concentration is a predetermined target value of the impurity concentration of the molten iron;
wherein the impurity concentration prediction model (41) is a trained machine learning model using, as input data, the amount of individual ferrous scrap materials (12) charged, and at least one of the impurity concentration of the molten iron in the preceding charge, the amount of residual molten iron in the preceding charge, and market transaction price information of the impurity, and using, as output data, the impurity concentration of the molten iron in the subsequent charge.

2. A method for producing molten iron using the method for predicting an impurity concentration of molten iron according to Claim 1.

3. A device (22) for predicting an impurity concentration of molten iron refined in an electric arc furnace facility (1), the device (22) comprising:
an impurity concentration predictor (31) that inputs amounts of individual ferrous scrap materials (12) charged, the ferrous scrap materials (12) being classified by type, and at least one of an impurity concentration of molten iron in a preceding charge, an amount of residual molten iron in the preceding charge, and market transaction price information of an impurity into an impurity concentration prediction model (41) and that outputs an impurity concentration of molten iron in a subsequent charge;
wherein the ferrous scrap materials (12) include low-grade scrap having an impurity concentration higher than an average value of impurity concentrations of all the ferrous scrap materials (12) and high-grade scrap having an impurity concentration lower than the average value, and
the impurity concentration predictor (31) determines an amount of the low-grade scrap charged in such a manner that the output impurity concentration of the molten iron in the subsequent charge is a predetermined target value of the impurity concentration of the molten iron;
wherein the impurity concentration prediction model (41) is a trained machine learning model using, as input data, the amount of individual ferrous scrap materials (12) charged, and at least one of the impurity concentration of the molten iron in the preceding charge, the amount of residual molten iron in the preceding charge, and market transaction price information of the impurity, and using, as output data, the impurity concentration of the molten iron in the subsequent charge.

## Patentansprüche

1. Verfahren zum Vorhersagen, durch eine Vorrichtung (22) zum Vorhersagen einer Verunreinigungskonzentration von flüssigem Eisen, einer Verunreinigungskonzentration von in einer Elektrolichtbogenofenanlage (1) raffiniertem flüssigem Eisen, wobei das Verfahren umfasst:
Eingeben von Mengen einzelner eingesetzter Eisenschrottmaterialien (12), wobei die Eisenschrottmaterialien (12) nach Art klassifiziert werden, und mindestens eines von einer Verunreinigungskonzentration von flüssigem Eisen in einer vorhergehenden Charge, einer Restmenge an flüssigem Eisen in der vorhergehenden Charge und einer Markttransaktionspreisinformation einer Verunreinigung in ein Verunreinigungskonzentrations-Vorhersagemodell (41); und Ausgeben einer Verunreinigungskonzentration von flüssigem Eisen in einer nachfolgenden Charge;
wobei die Eisenschrottmaterialien (12) minderwertigen Schrott mit einer Verunreinigungskonzentration, die höher als ein Durchschnittswert von Verunreinigungskonzentrationen aller Eisenschrottmaterialien (12) ist, und hochwertigen Schrott mit einer Verunreinigungskonzentration, die niedriger als der Durchschnittswert ist, enthalten, und
eine Menge des eingesetzten minderwertigen Schrotts derart bestimmt wird, dass die durch das Verfahren zum Vorhersagen einer Verunreinigungskonzentration vorhergesagte Verunreinigungskonzentration des flüssigen Eisens in der nachfolgenden Charge ein vorbestimmter Zielwert der Verunreinigungskonzentration des flüssigen Eisens ist;
wobei das Verunreinigungskonzentrations-Vorhersagemodell (41) ein trainiertes Maschinenlernmodell ist, das als Eingabedaten die Menge einzelner eingesetzter Eisenschrottmaterialien (12) und mindestens eines von der Verunreinigungskonzentration des flüssigen Eisens in der vorhergehenden Charge, der Restmenge an flüssigem Eisen in der vorhergehenden Charge und einer Markttransaktionspreisinformation der Verunreinigung verwendet und das als Ausgabedaten die Verunreinigungskonzentration des flüssigen Eisens in der nachfolgenden Charge verwendet.

2. Verfahren zum Herstellen von flüssigem Eisen unter Verwendung des Verfahrens zum Vorhersagen einer Verunreinigungskonzentration von flüssigem Eisen nach Anspruch 1.

3. Vorrichtung (22) zum Vorhersagen einer Verunreinigungskonzentration von in einer Elektrolichtbogenofenanlage (1) raffiniertem flüssigem Eisen, wobei die Vorrichtung (22) umfasst:
einen Verunreinigungskonzentrations-Prädiktor (31), der Mengen einzelner eingesetzter Eisenschrottmaterialien (12), wobei die Eisenschrottmaterialien (12) nach Art klassifiziert werden, und mindestens eines von einer Verunreinigungskonzentration von flüssigem Eisen in einer vorhergehenden Charge, einer Restmenge an flüssigem Eisen in der vorhergehenden Charge und einer Markttransaktionspreisinformation einer Verunreinigung in ein Verunreinigungskonzentrations-Vorhersagemodell (41) eingibt und der eine Verunreinigungskonzentration von flüssigem Eisen in einer nachfolgenden Charge ausgibt;
wobei die Eisenschrottmaterialien (12) minderwertigen Schrott mit einer Verunreinigungskonzentration, die höher als ein Durchschnittswert von Verunreinigungskonzentrationen aller Eisenschrottmaterialien (12) ist, und hochwertigen Schrott mit einer Verunreinigungskonzentration, die niedriger als der Durchschnittswert ist, enthalten, und
der Verunreinigungskonzentrations-Prädiktor (31) eine Menge des eingesetzten minderwertigen Schrotts derart bestimmt, dass die ausgegebene Verunreinigungskonzentration des flüssigen Eisens in der nachfolgenden Charge ein vorbestimmter Zielwert der Verunreinigungskonzentration des flüssigen Eisens ist;
wobei das Verunreinigungskonzentrations-Vorhersagemodell (41) ein trainiertes Maschinenlernmodell ist, das als Eingabedaten die Menge einzelner eingesetzter Eisenschrottmaterialien (12) und mindestens eines von der Verunreinigungskonzentration des flüssigen Eisens in der vorhergehenden Charge, der Restmenge an flüssigem Eisen in der vorhergehenden Charge und einer Markttransaktionspreisinformation der Verunreinigung verwendet und das als Ausgabedaten die Verunreinigungskonzentration des flüssigen Eisens in der nachfolgenden Charge verwendet.

## Revendications

1. Procédé permettant de prédire, à l'aide d'un dispositif (22) pour prédire une concentration en impureté de fonte liquide, une concentration en impureté de fonte liquide affinée dans une installation de four à arc électrique (1), le procédé comprenant :
la saisie de quantités de matériaux de ferraille ferreuse (12) individuels chargés, les matériaux de ferraille ferreuse (12) étant classés par type, ainsi qu'au moins un parmi : une concentration en impureté de fonte liquide dans une charge précédente, une quantité de fonte liquide résiduelle dans la charge précédente, ou des informations de prix de transaction de marché d'une impureté, dans un modèle de prédiction de concentration en impureté (41) ; et la génération d'une concentration en impureté de fonte liquide dans une charge suivante ;
les matériaux de ferraille ferreuse (12) comprenant de la ferraille de faible qualité présentant une concentration en impureté supérieure à une valeur moyenne de concentrations en impureté de l'ensemble des matériaux de ferraille ferreuse (12) et de la ferraille de qualité supérieure présentant une concentration en impureté inférieure à la valeur moyenne, et
une quantité de ferraille de faible qualité chargée est déterminée de telle sorte que la concentration en impureté de la fonte liquide dans la charge suivante, prédite par le procédé de prédiction de concentration en impureté, soit une une valeur cible prédéterminée de la concentration en impureté de la fonte liquide ;
le modèle de prédiction de concentration en impureté (41) étant un modèle d'apprentissage automatique entraîné utilisant, comme données d'entrée, la quantité de matériaux de ferraille ferreuse (12) individuels chargés, ainsi qu'au moins un parmi : la concentration en impureté de la fonte liquide dans la charge précédente, la quantité de fonte liquide résiduelle dans la charge précédente et les informations de prix de transaction de marché de l'impureté, et utilisant, comme données de sortie, la concentration en impureté de la fonte liquide dans la charge suivante.

2. Procédé de production de fonte liquide utilisant le procédé de prédiction de concentration en impureté de fonte liquide selon la revendication 1.

3. Dispositif (22) pour prédire une concentration en impureté de fonte liquide affinée dans une installation de four à arc électrique (1), le dispositif (22) comprenant :
un prédicteur de concentration en impureté (31) qui reçoit en entrée des matériaux de ferraille ferreuse (12) individuels chargés, les matériaux de ferraille ferreuse (12) étant classées par type, et au moins un parmi : une concentration en impureté de fonte liquide dans une charge précédente, une quantité de fonte liquide résiduelle dans la charge précédente, et des informations de prix de transaction de marché d'une impureté, dans un modèle de prédiction de concentration en impureté (41), et qui fournit en sortie une concentration en impureté de fonte liquide dans une charge suivante ;
les matériaux de ferraille ferreuse (12) comprenant de la ferraille de faible qualité présentant une concentration en impureté supérieure à une valeur moyenne de concentrations en impureté de l'ensemble des matériaux de ferraille ferreuse (12) et de la ferraille de qualité supérieure présentant une concentration en impureté inférieure à la valeur moyenne, et
le prédicteur de concentration en impureté (31) détermine une quantité de ferraille de faible qualité chargée de telle sorte que la concentration en impureté en sortie de la fonte liquide dans la charge suivante soit une valeur cible prédéterminée de la concentration en impureté de la fonte liquide ;
le modèle de prédiction de concentration en impureté (41) étant un modèle d'apprentissage automatique entraîné utilisant, comme données d'entrée, la quantité de matériaux de ferraille ferreuse (12) individuels chargés, ainsi qu'au moins un parmi : la concentration en impureté de la fonte liquide dans la charge précédente, la quantité de fonte liquide résiduelle dans la charge précédente et des informations de prix de transaction de marché de l'impureté, et utilisant, comme données de sortie, la concentration en impureté de la fonte liquide dans la charge suivante.
